# EUROPÄISCHE PATENTSCHRIFT

(11) **EP 0 502 913 B1**
(45) Veröffentlichungstag und Bekanntmachung des Hinweises auf die Patenterteilung: **24.08.1994**
(21) Anmeldenummer: 90917667.9
(22) Anmeldetag: 23.11.1990
(51) Int. Cl.: C01B 33/32

(54) **VERFAHREN ZUR HYDROTHERMALEN HERSTELLUNG VON KRISTALLINEM NATRIUMDISILIKAT**
PROCESS FOR THE HYDROTHERMAL PRODUCTION OF CRYSTALLINE SODIUM DISILICATE
PROCEDE DE FABRICATION HYDROTHERMALE DE DISILICATE DE SODIUM CRISTALLIN

(30) Priorität: 02.12.1989 DE 3939919
(43) Veröffentlichungstag der Anmeldung: 16.09.1992
(73) Patentinhaber: Henkel Kommanditgesellschaft auf Aktien, 40191 Düsseldorf (DE)
(72) Erfinder: JUST, Günther, D-4010 Hilden (DE)
(86) Internationale Anmeldenummer: EP9002006
(87) Internationale Veröffentlichungsnummer: WO9108171

(56) Entgegenhaltungen:
- DE-A- 2 549 167
- US-A- 2 881 049

## Beschreibung

Die Erfindung betrifft ein Verfahren zur hydrothermalen Herstellung von kristallinem Natriumdisilikat aus Quarzsand und Natronlauge und/oder aus wäßrigen Lösungen von amorphem Natriumdisilikat.

Die Herstellung kristalliner Natriumsalze von Kieselsäuren mit einem SiO₂/Na₂O-Verhältnis von 2 : 1 bis 3 : 1 erfolgt üblicherweise durch Temperung von Natriumsilikat-Gläsern oder durch Erhitzen von Natriumcarbonat und Quarz (DE-OS 31 00 942).

Willgallis und Range (Glastechnische Berichte, 37 (1964), 194-200) beschreiben die Herstellung von α,β- und γ-Na₂Si₂O₅ durch Temperung von geschmolzenem und nicht geschmolzenem, entwässertem Natronwasserglas. Diese Produkte haben Schichtstruktur. Daß es sich um kristalline Formen handelt, ergibt sich aus den Röntgendiffraktionsspektren. Die Autoren zeigen, daß in Abhängigkeit von der Temperatur verschiedene Kristallformen erhalten werden.

Benecke und Lagaly beschreiben in Am. Mineral., 62 (1977), 763-771 ein Verfahren zur Herstellung eines hydratisierten, kristallinen Natriumsilikates mit Kanemit-Struktur (etwa der Zusammensetzung NaHSi₂O₅). Dabei wird in einem ersten Schritt SiO₂ in Methanol dispergiert und mit kalter Natronlauge versetzt. Dieses Verfahren ist aufwendig wegen der kontrollierten Zugabe der einzelnen Substanzen und erfordert wegen der Verwendung an brennbarem Methanol spezielle Sicherheitsvorkehrungen.

In der DE-OS 34 17 649 wird ein Verfahren beschrieben, bei dem man hydratisiertes Natriumsilikat mit Kristallkeimen versetzt, die Reaktionsmischung durch Erhitzen entwässert und die entwässerte Reaktionsmischung so lange bei einer Temperatur hält, die mindestens 450 °C beträgt, jedoch unter dem Schmelzpunkt liegt, bis sich das kristalline Natriumsilikat mit Schichtstruktur gebildet hat.

Bei der Entwässerung (beim Eindampfen) von Wasserglaslösungen oder Lösungen üblicher Natriumsilikate (ohne Schichtstruktur) mit einem Mol-Verhältnis SiO₂/Na₂O von 1,9 : 1 bis 3,5 : 1 werden amorphe Produkte erhalten. Erst bei Temperaturen oberhalb 450 °C und im Verlauf mehrerer Stunden kristallisieren diese Produkte in Gegenwart einer wäßrigen Phase (DE-OS 34 17 649). Für diese Reaktion sind im allgemeinen mehrere Stunden notwendig. Bei Temperaturen zwischen 600 und 850 °C reichen mitunter auch Minuten und bei bestimmten Silikaten Bruchteile einer Minute aus.

EP-A 0 320 770 beschreibt ein Verfahren zur Herstellung von röntgenkristallinem Natriumdisilikat (Natriumsilikat mit Schichtstruktur) durch Auflösen von röntgenkristallinem Schichtsilikat in Wasser und anschließendem Eindampfen bei erhöhter Temperatur. Dieses Verfahren geht dabei bereits von kristallinem Natriumschichtsilikat aus und ist speziell auf die Herstellung von Natriumdisilikat-haltigen Wasch- und Reinigungsmitteln gerichtet. Diese Druckschrift beschreibt lediglich eine Verarbeitungsform von primär durch andere Verfahren erhaltenem kristallinem Natriumdisilikat durch Lösen in Wasser und anschließendes Verdampfen von Wasser.

Es ist ferner aus US-A-2881049 bekannt bei einem molaren Ansatz von Na₂O/SiO₂ von 1:1 aus Quarzsand und Natronlauge unter hydrothermalen Bedingungen Methasilikat herzustellen, wobei der Feststoffanteil in der Reaktionsmischung etwa 60 % beträgt.

Gleichermaßen ist dem Fachmann bekannt, daß das Lösen von amorphem Natriumdisilikat in Wasser und anschließendem Eindampfen wiederum zu amorphem Natriumdisilikat führt.

Gemäß dem Stand der Technik ist es bisher nicht möglich, in einer technisch realisierbaren Form auf hydrothermalem Weg direkt zu kristallinem Natriumdisilikat mit einer hohen Reinheit zu gelangen.

J. Franke (Bull. Soc. Chim., 1950, S. 454 f) beschreibt Versuche zur hydrothermalen Herstellung von Natriumdisilikat. Zur Isolation des Reaktionsproduktes aus Quarz und Natriumhydroxidlösung wurde in aufwendigen Apparaturen z.T. durch Einsatz von Kristallisationskeimen versucht, eine Kristallisation des Reaktionsproduktes herbeizuführen. Die erhaltenen Reaktionsprodukte überließ man anschließend mehrere Wochen unter Kühlung der Kristallisation, wobei man oft Gemische aus amorphem und kristallinem Natriumdisilikat erhielt.

Es bestand nun die Aufgabe, ein einfaches Verfahren bereitzustellen, daß es ermöglicht, ausgehend von Quarzsand und Natriumhydroxid-Lösung und/oder wäßrigen Lösungen von amorphem Natriumdisilikat in einer Stufe kristallines, hochreines Natriumdisilikat herzustellen.

Überraschend wurde nun gefunden, daß festes, kristallines und hochreines Natriumdisilikat bei der hydrothermalen Umsetzung von Quarzsand und Natronlauge und/oder wäßrigen Lösungen von amorphem Natriumdisilikat entsteht, wenn begrenzte Konzentrations- und Temperaturbedingungen eingehalten werden.

Gemäß der Erfindung wurde die Aufgabe gelöst durch ein Verfahren zur hydrothermalen Herstellung von kristallinem Natriumdisilikat in der β-Form mit einem Molverhältnis Na₂O : SiO₂ von 1 : 2 bei erhöhter Temperatur und unter dem dieser Temperatur entsprechenden Druck in einem Druckbehälter, dadurch gekennzeichnet, daß Quarzsand und Natronlauge und/oder eine wäßrige Lösung von amorphem Natriumdisilikat in einem Molverhältnis von Na₂ : SiO₂, das der Zusammensetzung des gewünschten Endprodukts entspricht mit einer Gesamtfeststoffkonzentration von 50 bis 75 Gew. -% in einem ersten Schritt auf mindestens 235 °C erhitzt werden, in einem zweiten Schritt sich gegebenenfalls eine Aufkonzentration des Gesamtfeststoffgehalts durch Entfernung von Wasser aus dem Reaktionsgemisch anschließen kann, in Abhängigkeit der Durchführung des zweiten Schritts in einem dritten Schritt die im zweiten Schritt entfernte Wassermenge ganz oder teilweise während oder unmittelbar nach der sich anschließenden Abkühlung auf 90 bis 130 °C wieder zugegeben wird und anschließend das angefallene, kristalline Natriumdisilikat abgetrennt wird.
Die Untergrenze für die Gesamtfeststoffkonzentration liegt bei 50 Gew. -%. Unter Gesamtfeststoffkonzentration versteht man hierbei den prozentualen Anteil der insgesamt eingesetzten Feststoffe SiO₂ und Na₂O (aus NaOH berechnet), im Falle von wäßrigen Lösungen von amorphem Natriumdisilikat den darin enthaltenen Anteil an Feststoff oder bei Gemischen aus Quarzsand, Natriumhydroxid und wäßrigen Lösungen aus amorphem Natriumdisilikat die Summe aller darin enthaltenen Feststoffe.

Dies ist ein Konzentrationsbereich, bei dem beim Abkühlen normalerweise hochviskose, kaum mehr fließfähige Massen auftreten, die nur noch schwer zu handhaben sind. Durch das Abscheiden von beachtlichen Mengen an kristallinem Natriumdisilikat während des Reaktionsverlaufs sinkt die Konzentration in der Lösung. Eine solche Suspension ist noch handhabbar und filtrierbar.

Die obere Grenze der Gesamtfeststoffkonzentration wird mit 75 Gew.-% durch die Grenzen der Verarbeitung gegeben. Von praktischer Bedeutung sind insbesondere Gesamtfeststoffkonzentrationen der eingesetzten Gemische oder Lösungen von 60 bis 70 Gew.-%. Bei Gesamtfeststoffkonzentrationen von über 75 Gew. -% steigt zwar die Ausbeute an kristallinem Natriumdisilikat weiter an, jedoch kommt es gleichzeitig zu immer stärkeren Wandanbackungen, die nur durch speziell abgestimmte Apparaturen vermieden werden können.

Der erste Schritt des Verfahrens entspricht einer Aufschlußreaktion, welche bei einer Temperatur von mindestens 235 °C in einem Druckbehälter (Autoklav) durchgeführt wird. Die bei dieser Temperatur zur Erzielung eines quantitativen Umsatzes notwendige Reaktionszeit beträgt 2 bis 3 h. Ein Umsatz von ca. 99 % kann schon nach einer Reaktionszeit von 30 min erhalten werden. Gemäß der Erfindung können Umsatz-Werte von weit über 99 % erzielt werden.

Allgemein gilt, daß sich die Reaktionszeit mit zunehmender Reaktionstemperatur verkürzt, jedoch die Reaktionstemperatur, um den verfahrenstechnischen Aufwand in einem durchführbaren Rahmen zu halten, zwischen 235 und 300 °C, insbesondere zwischen 250 und 280 °C liegt. Dennoch kann die Reaktion auch jederzeit bei einer Reaktionstemperatur von oberhalb von 300 °C durchgeführt werden. Dies ist insbesondere dann von Interesse, wenn kurze Reaktionszeiten erzielt werden sollen, wie dies bei einer kontinuierlichen Verfahrensführung der Fall ist.

Die mittlere Ausbeute an kristallinem Natriumdisilikat beträgt in einem isoliert betrachteten Ansatz 50 bis 60 Gew.-% der eingesetzten Gesamtfeststoffmenge. Der Rest liegt im wesentlichen als amorphes Natriumdisilikat in gelöster Form vor und fällt bei der Filtration als Filtrat an. Dieses Filtrat kann gegebenenfalls nach Aufkonzentration auf den erforderlichen Konzentrationsbereich erneut in das Verfahren eingebracht werden, sofern keine andere Verwendungsmöglichkeit dafür besteht (Beispiel 3). Hierbei ist wiederum darauf zu achten, daß für das entstehende Gemisch eine Gesamtfeststoffkonzentration von mindestens 50 Gew.-% eingehalten wird. Gegebenenfalls kann durch Entfernung der berechneten Menge an Wasser während des Aufheizens auf die Reaktionstemperatur die gewünschte Konzentration eingestellt werden. Die Ausbeute an kristallinem Natriumdisilikat, die aus solchen Gemischen aus zurückgewonnenen Lösungen von amorphem Natriumdisilikat, Quarzsand und Natronlauge besteht, beträgt ebenfalls 50 bis 60 Gew.-%. Auf diese Weise kommt es nach und nach zu einer vollständigen Umwandlung zu kristallinem Produkt.

Für den Einsatz von wäßrigen Lösungen von amorphem Natriumdisilikat gilt hinsichtlich der angegebenen Konzentrations- und Temperaturbereiche Entsprechendes. Die Lösung ist gegebenenfalls den Konzentrationserfordernissen durch Aufkonzentration anzupassen. Der Zeitbedarf ist jedoch wesentlich geringer als beim Aufschließen von Quarz, die Ausbeute an kristallinem Natriumdisilikat ist etwas geringer. Sie läßt sich jedoch durch Zusatz von kristallinem Natriumdisilikat als Impfmasse noch steigern und liegt dann bei über 45 Gew.-% (Beispiel 4).

Das Verfahren kann gemäß der Erfindung gegebenenfalls auch so geführt werden, daß die Gesamtfeststoffkonzentration in einem sich an den ersten Schritt anschließenden zweiten Schritt durch Entfernung von Wasser aus dem Reaktionsgemisch erhöht wird. Der als Dampf aus dem Reaktionsgefäß austretende Wasseranteil wird kondensiert, und kann in einem dritten Schritt dem Reaktionsgemisch zu einem späteren Zeitpunkt ganz oder teilweise wieder zugeführt werden. Dieser dritte Schritt erfolgt in der Regel während der Abkühlung oder unmittelbar danach. Die Aufkonzentration bewirkt, daß die Gesamtfeststoffkonzentration um weitere 5 bis 10 Gew. -% erhöht wird, wodurch eine weitere Erhöhung der Ausbeute an kristallinem Natriumsilikat durch Kristallisation erzielt wird.

Die Aufkonzentration des Reaktionsgemisches kann auch bereits während des Erhitzens auf die Reaktionstemperatur erfolgen. Dies kann insbesondere dann von Interesse sein, wenn die Gesamtfeststoffkonzentrationen der eingesetzten Gemische niedrig sind (Beispiele 3 und 4).

Vor der Aufarbeitung, jedoch während oder unmittelbar nach der Abkühlung, wenn das Reaktionsgemisch eine Temperatur zwischen 90 und 130 °C besitzt, wird die entfernte Menge Wasser wieder zugesetzt, wodurch die Mischung wieder handhabbar wird.

Die weitere Aufarbeitung erfolgt anschließend durch Abtrennung des kristallinen Natriumdisilikats von der Mutterlauge, insbesondere durch Filtration bei einer Temperatur zwischen 100 und 130 °C. Hierzu haben sich insbesondere beheizte Filterpressen oder Drucknutschen bewährt, in welchen die Filtration durch ein alkalibeständiges Filtertuch bevorzugt bei 2 bis 3 bar erfolgt. Zweckmäßig wird mit Dampf von 2 bar zur Verdrängung von Resten der Lösung nachgeblasen. Der anfallende Filterkuchen besitzt noch einen Wassergehalt von etwa 15 Gew.-%. Nach dem Zerkleinern des Filterrückstandes kann, wenn gewünscht, der Wassergehalt auf etwa 2 Gew.-%, beispielsweise durch Behandlung mit Heißluft in einem Wirbeltrockner gesenkt werden. An die Trocknung kann sich noch eine Siebung und/oder Mahlung anschließen.

Das so erhaltene kristalline Natriumdisilikat besitzt eine Reinheit von über 95 % und besteht aus der β-Form (Tieftemperatur-Form) wie durch Röntgenbeugungsdiagramme nachgewiesen wurde.

Nachfolgende Beispiele erläutern das Verfahren, ohne jedoch darauf beschränkt zu sein:

### Beispiel 1

In einem mit Nickel plattierten Rührautoklav mit 5 l Gesamtinhalt, belastbar bis 350 °C und 300 bar, ausgerüstet mit Ankerrührer und Elektroheizung, wurde die hydrothermale Silikatsynthese und die kristalline Umwandlung durchgeführt.

Dazu wurde der Autoklav mit 1,6 kg Natronlauge (50 Gew.-%), 0,25 kg Wasser und 1,2 kg Quarzsand (Korngröße 0,1 bis 0,7 mm) gefüllt und auf 250 °C aufgeheizt. Nach 2 h Reaktionszeit wurde abgekühlt und bei etwa 100 °C der Autoklaveninhalt geleert. Es lag eine mittelviskose, feinteilige Suspension mit 60 Gew.-% Feststoffgehalt vor. Zur Isolierung des kristallinen Natriumdisilikat-Anteils wurde über eine beheizte Drucknutsche mit feinporigem Polypropylentuch bei 2 bis 3 bar filtriert und zur Verdrängung von anhaftender Lösung mit Dampf von 2 bar nachgeblasen. Der anfallende Filterkuchen mit einem Wassergehalt von etwa 15 Gew.-% wurde anschließend zerkleinert und in dieser Form mit Heißluft auf etwa 2 Gew. -% Wassergehalt getrocknet. Eine abschließende Mahlung und Siebung ergab 0,98 kg kristallines Natriumdisilikat als Endprodukt. Laut Röntgenbeugungsdiagramm handelte es sich um reines kristallines Natriumdisilikat der β-Form. Die Ausbeute an kristallinem Produkt betrug 51 %. Die angefallene Mutterlauge wog 1,95 kg und enthielt 0,88 kg amorphes Disilikat, was einem Feststoffgehalt von 45 % entspricht.

### Beispiel 2

Die Apparatur aus Beispiel 1 wurde mit 1,6 kg Natronlauge (50 Gew.-%) und 1,2 kg Quarzsand gefüllt, auf 250 °C aufgeheizt und 2 h bei dieser Temperatur gehalten. Vor dem Abkühlen wurden 0,2 kg Wasser abdestilliert und damit die Gesamtfeststoffkonzentration von 65 Gew.-% auf 70 Gew.-% erhöht. Nach dem Abkühlen auf etwa 100 °C wurden 0,2 kg Wasser in den Ansatz zurückgeführt und dann aufgearbeitet. Es wurde eine Ausbeute an kristallinem Natriumdisilikat von 58 % erzielt.

### Beispiel 3

Die Apparatur aus Beispiel 1 wurde mit 1,9 kg Mutterlauge (45 Gew.-% Feststoffgehalt an amorphem Natriumdisilikat), 0,85 kg Natronlauge (50 Gew.-%) und 0,64 kg Quarzsand gefüllt. Während des Aufheizens auf 250 °C wurden 0,6 kg Wasser abdestilliert. Nach 2 h Reaktionszeit wurde abgekühlt und wie in Beispiel 1 beschrieben, aufgearbeitet. Die Ausbeute an kristallinem Produkt betrug 55 %.

### Beispiel 4

Die Apparatur aus Beispiel 1 wurde mit 3,5 kg einer 50 Gew.-%igen wäßrigen Lösung von amorphem Natriumdisilikat gefüllt und während des Aufheizens auf 250 °C 0,8 kg abdestilliert. Nach einer Reaktionszeit von 20 min wurde wie in Beispiel 1 beschrieben abgekühlt und aufgearbeitet. Die Ausbeute an kristallinem Produkt betrug 44 Gew. -%.

## Patentansprüche

1. Verfahren zur hydrothermalen Herstellung von festem, kristallinem und hochreinem Natriumdisilikat in der β-Form mit einem Molverhältnis Na₂O : SiO₂ von 1 : 2, wobei man Quarzsand mit Natronlauge bei erhöhter Temperatur und unter dem dieser Temperatur entsprechenden Druck in einem Druckbehälter umsetzt, dadurch gekennzeichnet,
daß Quarzsand und Natronlauge und/oder eine wäßrige Lösung von amorphem Natriumdisilikat in einem Molverhältnis von Na₂ : SiO₂, das der Zusammensetzung des gewünschten Endproduktes entspricht, mit einer Gesamtfeststoffkonzentration von 50 bis 75 Gew.-% in einem ersten Schritt auf mindestens 235°C erhitzt werden in einem zweiten Schritt sich gegebenenfalls eine Aufkonzentration des Gesamtfeststoffgehalts durch Entfernung von Wasser aus dem Reaktionsgemisch anschließen kann, in Abhängigkeit der Durchführung des zweiten Schritts in einem dritten Schritt die im zweiten Schritt entfernte Nassermenge ganz oder teilweise während oder unmittelbar nach der sich anschließenden Abkühlung auf 90 bis 130°C wieder zugegeben wird und anschließend das angefallene, kristalline Natriumdisilikat abgetrennt wird.

2. Verfahren nach Anspruch 1, dadurch gekennzeichnet, daß die Gesamtfeststoffkonzentration 60 bis 70 Gew.-% beträgt.

3. Verfahren nach Ansprüchen 1 und 2, dadurch gekennzeichnet, daß die Reaktionstemperatur zwischen 235 und 300°C, vorzugsweise zwischen 250 und 280°C liegt.

4. Verfahren nach Ansprüchen 1 bis 3, dadurch gekennzeichnet, daß die wäßrige Lösung von amorphem Natriumdisilikat aus der Mutterlauge besteht, die bei der Abtrennung des kristallinen Natriumdisilikats gewonnen wird.

5. Verfahren nach Ansprüchen 1 bis 4, dadurch gekennzeichnet, daß die Aufkonzentration durch Entfernung von Wasser bereits während dem Erhitzen des Reaktionsgemisches erfolgt.

## Claims

1. A process for the hydrothermal production of solid, crystalline, high-purity sodium disilicate in the β-form with a molar ratio of Na₂O to SiO₂ of 1:2, silica sand being reacted with sodium hydroxide in a pressure vessel at elevated temperature and under a pressure corresponding to that temperature, characterized in that, in a first step, silica sand and sodium hydroxide and/or an aqueous solution of amorphous sodium disilicate with a molar ratio of Na₂O to SiO₂ which corresponds to the composition of the desired end product and with a total solids concentration of 50 to 75% by weight are heated to at least 235°C, in a second step the total solids content is optionally concentrated by removal of water from the reaction mixture, in a third step dependent on completion of the second step the quantity of water removed in the second step is completely or partly re-added during or immediately after subsequent cooling to 90 to 130°C and the crystalline sodium disilicate formed is then removed.

2. A process as claimed in claim 1, characterized in that the total solids concentration is 60 to 70% by weight.

3. A process as claimed in claims 1 and 2, characterized in that the reaction temperature is between 235 and 300°C and preferably between 250 and 280°C.

4. A process as claimed in claims 1 to 3, characterized in that the aqueous solution of amorphous sodium disilicate consists of the mother liquor obtained in the removal of the crystalline sodium disilicate.

5. A process as claimed in claims 1 to 4, characterized in that the concentration step is carried out by removal of water during the actual heating of the reaction mixture.

## Revendications

1. Procédé de fabrication hydrothermale de disilicate de sodium solide cristallin et de haute pureté sous forme β avec un rapport molaire Na₂:SiO₂ égal à 1:2, dans lequel on fait réagir du sable de quartz avec une solution de soude caustique à température élevée et sous une pression correspondant à cette température dans un récipient à pression, caractérisé en ce que, au cours d'une première étape, on chauffe à au moins 235°C le sable de quartz et la solution de soude caustique et/ou une solution aqueuse de disilicate de sodium amorphe avec un rapport molaire de Na₂:SiO₂ correspondant à la composition du produit final recherché, avec une teneur totale en substances solides de 50 à 75% en poids, qu'au cours d'une deuxième étape, on peut éventuellement effectuer une augmentation de la concentration de la teneur totale en matières solides par élimination d'eau du mélange réactionnel, qu'au cours d'une troisième étape, la quantité d'eau éliminée au cours de la deuxième étape peut être réintroduite totalement ou partiellement en fonction de la réalisation de la deuxième étape, pendant ou immédiatement après le refroidisement ultérieur à une température entre 90 et 130°C, tandis que le disilicate de sodium cristallin ainsi obtenu est sépare.

2. Procédé selon la revendication 1, caractérisé en ce que la concentration totale en matières solides est comprise entre 60 et 70% en poids.

3. Procédé selon les revendications 1 et 2, caractérisé en ce que la température de réaction est comprise entre 235 et 300°C et, de préférence, entre 250 et 280°C.

4. Procédé selon les revendications 1 à 3, caractérisé en ce que la solution aqueuse de disilicate de sodium amorphe est constituée de la liqueur mère résultant de la séparation du disilicate de sodium cristaliin.

5. Procédé selon les revendications 1 à 4, caractérisé en ce que l'augmentation de la concentration par élimination de l'eau a déjà lieu au cours du chauffage du mélange réactionnel.
